# EUROPEAN PATENT APPLICATION

(11) **EP 4 191 475 A1**
(43) Date of publication of application: **07.06.2023**
(21) Application number: 22204985.0
(22) Date of filing: 02.11.2022
(51) Int. Cl.: G06N 3/044, G06N 3/045, G06N 3/063, G06T 1/20, G06V 10/82

(54) **METHOD AND SYSTEM OF HIGHLY EFFICIENT NEURAL NETWORK VIDEO IMAGE PROCESSING**

(30) Priority: 06.12.2021 US 202117543551
(71) Applicant: INTEL Corporation, Santa Clara, CA 95054 (US)
(72) Inventor: RUDOY, Dmitry, 3298110 Haifa (IL); LEVY, Noam, 21720 Karmiel (IL); BERLIN, Ben, 31015 Haifa (IL); GOREN, Amir, Beer Yaakov (IL); ELRON, Noam, 6813657 Tel Aviv (IL)
(74) Representative: HGF

(57) **Abstract**

A method, system, and article of highly efficient neural network video image processing uses temporal correlations.

## Description

### BACKGROUND

Many image processing applications use deep neutral networks to analyze image data of frames of a video sequence for computer-vision tasks or image data transformation for particular image related tasks. Such computer-vision tasks may include object detection, object segmentation, object recognition, 3D reconstruction, and so forth. The transformations may include encoding and decoding, changing resolutions, tone correction, refining a white point, and so forth. Such neural network operations, however, are often largely redundant by fully processing each frame of a video sequence even though many frames may have small insignificant differences between the frames. Thus, the conventional video image processing unnecessarily adds to the computational load and in turn, power consumed, to perform the video image processing, making it particularly difficult to perform image processing on small image processing devices.

### DESCRIPTION OF THE FIGURES

The material described herein is illustrated by way of example and not by way of limitation in the accompanying figures. For simplicity and clarity of illustration, elements illustrated in the figures are not necessarily drawn to scale. For example, the dimensions of some elements may be exaggerated relative to other elements for clarity. Further, where considered appropriate, reference labels have been repeated among the figures to indicate corresponding or analogous elements. In the figures:
FIGS. 1A-1D are images to demonstrate an example method of highly efficient neural network video image processing according to at least one of the implementations herein;
FIG. 2 is a graph showing a computational load reduction resulting from performing a method of highly efficient neural network video image processing according to at least one of the implementations herein;
FIG. 3 is a schematic diagram of an example system to perform the method of highly efficient neural network video image processing according to at least one of the implementations herein;
FIG. 4 is a schematic diagram of a temporal predictor unit of the system of FIG. 3 and according to at least one of the implementations herein;
FIG. 5 is a flow chart of a method of highly efficient neural network video image processing in accordance with at least one of the implementations herein;
FIG. 6 is a detailed flow chart of a method of highly efficient neural network video image processing in accordance with at least one of the implementations herein;
FIG. 7 is a schematic diagram of another example system for highly efficient neural network video image processing according to at least one of the implementations herein;
FIG. 8 is a schematic diagram of yet another example system for highly efficient neural network video image processing according to at least one of the implementations herein;
FIG. 9 is a schematic diagram of an alternative example system for highly efficient neural network video image processing according to at least one of the implementations herein;
FIG. 10 is a graph of a neural network used for operating the method of highly efficient neural network video image processing and resulting computational load in accordance with at least one of the implementations herein;
FIG. 11 is an illustrative diagram of an example image processing system
FIG. 12 is an illustrative diagram of an example system; and
FIG. 13 is an illustrative diagram of an example system, all arranged in accordance with at least some implementations of the present disclosure.

### DETAILED DESCRIPTION

One or more implementations are now described with reference to the enclosed figures. While specific configurations and arrangements are discussed, it should be understood that this is done for illustrative purposes only. Persons skilled in the relevant art will recognize that other configurations and arrangements may be employed without departing from the scope of the description. It will be apparent to those skilled in the relevant art that techniques and/or arrangements described herein also may be employed in a variety of other systems and applications other than what is described herein.

While the following description sets forth various implementations that may be manifested in architectures such as system-on-a-chip (SoC) architectures for example, implementation of the techniques and/or arrangements described herein are not restricted to particular architectures and/or computing systems and may be implemented by any architecture and/or computing system for similar purposes. For instance, various architectures employing, for example, multiple integrated circuit (IC) chips and/or packages, and/or various computing devices and/or consumer electronic (CE) devices such as set top boxes, televisions, smart-monitors, smartphones, cameras, laptop computers, tablets, other edge type of devices such as internet-of-things (loT) devices including kitchen or laundry appliances, home security systems, and so forth, may implement the techniques and/or arrangements described herein. Further, while the following description may set forth numerous specific details such as logic implementations, types and interrelationships of system components, logic partitioning/integration choices, and so forth, claimed subject matter may be practiced without such specific details. In other instances, some material such as, for example, control structures and full software instruction sequences, may not be shown in detail in order not to obscure the material disclosed herein.

The material disclosed herein may be implemented in hardware, firmware, software, or any combination thereof unless stated otherwise. The material disclosed herein may also be implemented as instructions stored on a machine-readable medium, which may be read and executed by one or more processors. A machine-readable medium may include any medium and/or mechanism for storing or transmitting information in a form readable by a machine (for example, a computing device). For example, a machine-readable medium may include read-only memory (ROM); random access memory (RAM); magnetic disk storage media; optical storage media; flash memory devices; electrical, optical, acoustical or other forms of propagated signals (e.g., carrier waves, infrared signals, digital signals, and so forth), and others. In another form, a non-transitory article, such as a non-transitory computer readable medium, may be used with any of the examples mentioned above or other examples except that it does not include a transitory signal per se. It does include those elements other than a signal per se that may hold data temporarily in a "transitory" fashion such as RAM and so forth.

References in the specification to "one implementation", "an implementation", "an example implementation", and so forth, indicate that the implementation described may include a particular feature, structure, or characteristic, but every implementation may not necessarily include the particular feature, structure, or characteristic. Moreover, such phrases are not necessarily referring to the same implementation. Further, when a particular feature, structure, or characteristic is described in connection with an implementation, it is submitted that it is within the knowledge of one skilled in the art to affect such feature, structure, or characteristic in connection with other implementations whether or not explicitly described herein.

Systems, articles, devices, mediums, and methods of highly efficient neural network video image processing are described herein.

Conventional neural networks used to perform computer-vision tasks or other image data transformations often use naive techniques, such as motion fields that indicate motion of content between video frames often by listing motion vectors. Where no motion exists, the processing can be omitted.

While these networks rely on the motion field and other equivalent simple image content techniques, these techniques do not factor other significant characteristics of the image content that are important to consider for accurate network inferences for specific computer-vision or transformation tasks. For example, objection segmentation networks also often factor image context and semantic classifications to identify typical image content shapes that are more likely to be in a foreground, such as a close-up of a person in a video conference for example. The conventional techniques have too many errors or artifacts because such context is not considered to omit processing of regions of an image. The conventional networks also are very sensitive to noise due to these reasons. In addition, the calculation of the motion field itself is a non-trivial and costly resource-heavy operation that adds to computational load, and in turn power consumption and delay, especially when attempting real time operations.

To resolve these issues, the presently disclosed system and method are directed to providing sparsity in layers of image processing neural networks (NNs) to avoid at least multiply-accumulate (MAC) operations as well as other NN layer operations to reduce the computational loads, and in turn power consumption, to operate the neural networks with a higher throughput. By one form, the method determines when layers, or portions (or regions) of a layer, of the NN can be omitted by using temporal correlations between features output from the NN layers. Particularly, when the NN is specifically constructed and trained to perform a specific task, such as object segmentation, then at least some of the factors being considered by the NN must be image data content characteristics sought specifically to perform the task, referred to herein as inherent specific task characteristics. These characteristics are inherently factored in features output from a NN layer, and in turn, factored into the correlations of the features. Thus, when early upstream features in one frame are closely correlated to early upstream features of a subsequent frame, the image data will change a very small amount from one frame to the next so that later downstream features of the earlier frame can be used instead of generating later current features of the current or subsequent frame. Thus, while running NNs to perform inferences on a video stream, the present method, then, exploits the temporal correlations in the features output from NN layers in order to skip or omit calculations with very small contributions to the inferences. By one approach, the neural network layers or regions of layers that can be omitted are convolutional layers, but the disclosed method also may work adequately with other types of NNs.

To accomplish the feature correlation and decision as to whether or not a region of a layer should be omitted, a temporal predictor uses a small auxiliary NN that receives both current features of a current frame output from an upstream layer of a main NN and a version of previous features from a previous frame. When measures between local features associated with previous and current frames show sufficient correlation or similarity between the current and previous frames as indicated by the output of the auxiliary NN, the system omits the operation of the main NN for those portions or layers, and relies on information from the past instead, such as pervious features from a downstream layer of the main NN. The similarity metric of the auxiliary NN is learned from the data and is tailored to the task. Also, skipping or omitting a portion of a layer either refers to an actual shut-off of power or an effective shut off. An actual shut-off includes disabling or shutting off power to specific purpose hardware such as a whole or part of an MAC that operates a NN, or stopping a general processor from operating the NN layer portions as controlled by software by turning off circuitry. An effective shut-off simply does not load features into an input buffer of the MAC circuits or does not load features into registers of the MAC so that these features are simply dropped and no feature processing occurs at the shut-off layer regions. The next region that is not shut-off is analyzed and processed so that the MAC works continuously on the incoming features despite the dropping of features for the skipped or omitted regions.

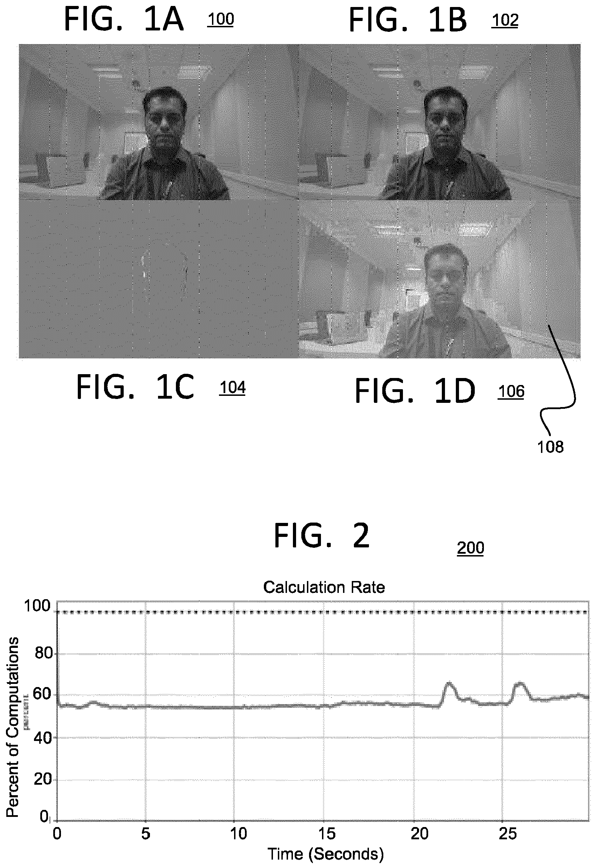

Referring to FIGS. 1A-1D, images 100 and 102 are consecutive frames of a video-chat scene taken with a static laptop camera. The overlapping backgrounds of the images 100 and 102 are shaded. A foreground-background classification (or segmentation) was obtained using a convolutional neural network (CNN). An image 104 shows the difference in classifications (between background and foreground) between the two consecutive frames 100 and 102. Those light areas that are non-zero (in difference indicating motion) in image 104 are a very small part of the image and indicate the noticeable differences between the two frames. An image 106 shows a shaded overlay 108 indicating the locations on the frame that a temporal predictor of the present method disabled turned off a main CNN by omitting layer operations for this area of the frame. The overlay area 108 is a very large proportion of the frame, and thereby significantly reduces computational load and power consumption.

It also will be noted that the auxiliary NN can be added to an existing NN without retraining the main NN. The auxiliary NN can be trained concurrently with the main NN or added as a "retro-fit", where it can be trained in an unsupervised manner, using a small amount of data as explained below.

Referring now to FIG. 2, a graph 200 shows the results of object segmentation to be used for background concealment (blurring) during a video chat or conference while using the presently disclosed method with CNNs. The graph 200 provides relative computation rate and shows that about 50% of the computations for a typical video conference scene on a MAC can be omitted by using previous features and still provide good quality video.

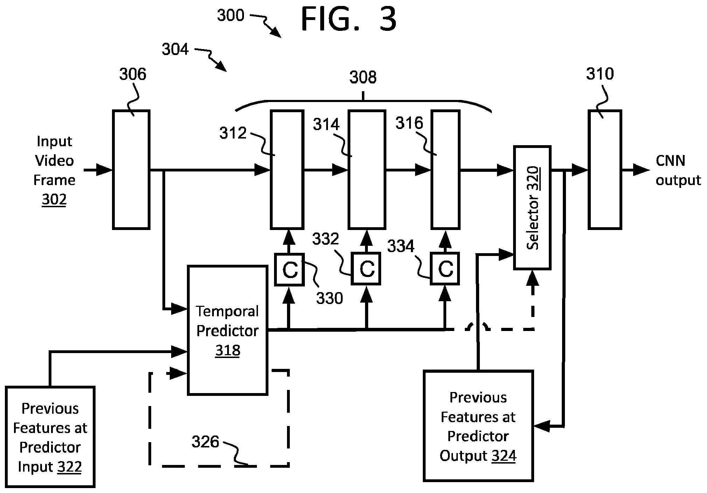

Referring to FIG. 3, an example image processing system 300 to perform the methods described herein has a main neural network (NN) 304 that receives input video frames 302 one at a time, and in a specific format such as RGB although many different variations can be used. In some forms, the three color components may each be treated as a separate color channel. However, no limit exists to the format of the input to the main NN 304 that can be used to operate the methods and systems herein. The neural network 304 has one or more upstream layers (or layer blocks) 306, an available omission section 308 that has a set of downstream available omission (or skip) layers (or blocks) 312, 314, and 316, and one or more output layers (or blocks) 310. The available omission section 308 has omission layers 312, 314, 316 that can have at least regions of the layers be omitted for efficiency without significantly and adversely affecting quality of the images. In this example, the layers 312, 314, and 316 of the available omission section 308 may be convolutional layers (or blocks) that are consecutive. Consecutive convolutional layers here refers to the convolutional layers themselves and ignores the intervening support layers, such as rectifying linear unit (ReLU), batch normalization, pooling layers, and/or other supporting activation layers for example. By one example, a layer block may have a single convolutional layer and one or more of the supporting layers, and where the block is treated as a single layer herein.

The system 300 also may have a temporal predictor unit 318 that determines correlations, or similarities, between current features output from a last layer of one or more upstream layers 306 and for a current frame being processed. By one approach, the current features are provided to the temporal predictor unit 318 along with a version of previous features also output from the same upstream layer (or stack of upstream layers) 306. The previous features may be stored in a memory or buffer 322 for that purpose. By an alternative, explained in greater detail below, the temporal predictor unit 318 provides compressed previous features 326 and uses these compressed previous features 326 recurrently in a recurrent loop (shown in dashed line) and as input rather than using the actual previous features obtained from the upstream layer 306 and placed into memory 322. It will be understood that the compressed previous features also could be collected and placed in a memory if not being used on the fly.

The output of the temporal predictor unit 318 may be an on-off signal (or do calculate or do not calculate signal), such as a binary signal, and may be provided on a per-region, per-pixel, or per-frame basis. The signal may be provided to controllers 330, 332, and 334 of each layer 312, 314, and 316 of the available omission section 308. The controllers 330, 332, 334 may be hardware, software, firmware, or any combination of these. The controllers 330, 332, 334 turn off (or disable) local layer operations depending on the signal so that processing of image data at the regions of the turned-off layer is stopped or avoided altogether to reduce power consumption. Such controllers 330, 332, and 334 already may have the ability to turn-ff operations on certain sections of the layer, such as to avoid the need to multiply by zero for example, when a feature output from a last layer is simply zero. The number of controllers and corresponding omission layers may be any number although only three are shown here.

It will be understood that turning off a layer or omission layer portion may turn off those modules or units that obtain input for the layer, and/or may include cutting off power to image signal processor (ISP) or graphics processing unit (GPU) hardware such as parts of, or entire, MACs so that even if input is received, it is not processed at the MAC. This physically turns off power to accelerator "MAC-bank" circuits which is an array of MAC operators so they do not operate whether or not current feature data has already been placed in accelerator or MAC input buffers. In this case, example control circuits of controls 330, 332, and 334 for turning off the layer portions may include accelerator circuitry that omits operation of MAC circuits that receive input data at the input registers.

As an alternative, the MAC hardware may organize the input data ahead of time so that input from the upstream layer(s) is simply skipped or omitted when the auxiliary NN indicates an omission of a layer region is to be implemented. In this case, reading of the input of a current frame is omitted and operation for a next layer is implemented right away. In this way, the omission layer portions of the available omission section is not actually physically turned off, but is virtually or effectively turned off. From the perspective of the MAC itself, operations are continuous as usual. This may be performed by dumping the input data of current features from the input buffer of the MAC once the current features are provided to the auxiliary NN or an input buffer of the auxiliary NN when such as used instead of the recurrent features mentioned above. For example, control circuits of controls 330, 332, and 334 for turning off the layers may include input logic that normally feeds the MAC-bank with the input data from the MAC input buffer in a certain order, and writes the results from the output of the MAC to an MAC output buffer in the correct order. When the input logic has the ability to use the do and do not calculate signals, then the input logic may omit placing unwanted current feature inputs into the MAC-bank queue and simply drops or overwrites the current features from the MAC input buffer, thereby increasing the throughput.

A selector 320 also is in the main NN flow path and is disposed downstream from the available omission section 308 to either receive current features from the last layer 316 of the downstream omission layers of the available omission section 308 (when not omitted) or previous features previously output from the available omission section when the available omission section is now being omitted. By one approach then, these downstream previous features are saved in memory or a buffer 324 with each frame, and the selector merely needs to use the downstream previous features when no downstream current features are present. The downstream previous features are then forwarded to the next downstream layer, output layer, neural network sections, or further neural network 310. Alternatively, the selector 320 could have circuitry or software for gate logic with two alternative inputs and receive the signal from the temporal predictor unit 318 to set a switch to one of the inputs. More details of the operation of system 300 is provided below.

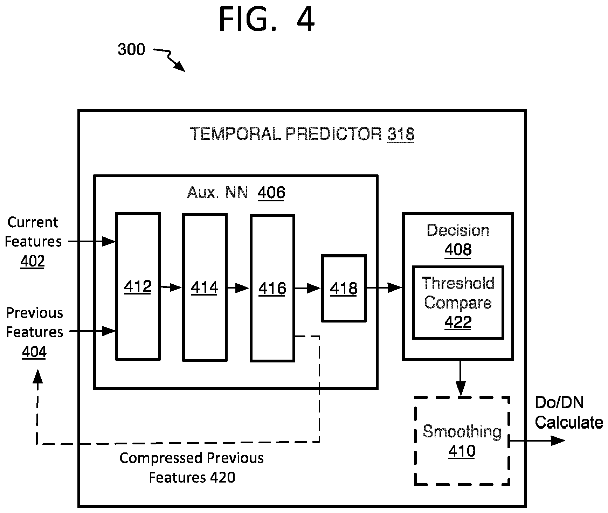

Referring to FIG. 4, the temporal predictor unit 318 of the system 300 may have one or more auxiliary neural networks (NN) 406 that may be a CNN. The temporal predictor unit 318 also may have a decision unit 408 with a threshold comparison unit 422, and optionally a smoothing unit 410. By one approach as shown, the auxiliary NN may have three consecutive convolutional layers (or blocks) 412, 414, and 416, each with a ReLU layer in this example but could have other supporting activation function layers.

The input layer 412 may have input nodes for receiving both the current features output from an upstream layer 306 of the main NN 304 and previous features of a previous frame output from the upstream layer 306 as mentioned with system 300.

By a different approach, compressed previous features 420 (or 326 on system 300) output from the auxiliary NN 406 are looped back to the input of the auxiliary NN 406 as recurrent data providing a compressed version of the previous features 420 (or 326) of a previous frame. Thus, the recurrent compressed previous features 420 represent or establish the internal state of the auxiliary NN 406, and each time current and previous features are input to the auxiliary NN 406 together, the temporal predictor unit 318 can be considered to be updating an internal state, i.e., the auxiliary NN becomes a recursive neural-network (RNN). This is advantageous because the use of the recurrent features do not need to use as large a memory as used to store the direct previous features since the recurrent features will be more compressed, thereby requiring a smaller memory capacity. Also, since this data is more compact, it will be more efficient than the processing with the direct previous features (e.g., channels can be smaller). The compressed previous features 420 may be obtained from any convolutional layer of the auxiliary NN, and by one form, the last convolutional layer 416 is used to provide the compressed previous features 420.

When an input tensor of current features is input to the available omission section 308 (or is otherwise obtained as output from an upstream layer) in N channels, the input to the temporal predictor unit 318 may be 2N channels. In one example, upstream current features and upstream previous features may have 32 channels each so that the first layer 412 (or first compressing layer or convolutional layer) of the auxiliary NN 406 has 64 input nodes.

When the RNN variation is used, the input to the first layer 412 may be N + M channels where M is the number of output channels (or order) of the internal state. By one form, M is 2 to 4 channels. In many cases, M is less than N, thereby further conserving resources (such as compute and memory access). By one form, each recurrent M channel is part of the output of the last convolutional layer 416 of the auxiliary NN 406 and each M channel has output features that represent a pixel region size, such as 4x4 pixels, where each region is to receive a probability from the output layer 418. The recurrent output is arranged into the M channels while a single channel may be provided to the output layer 418. This operation can be performed by simply dividing the output feature surface of the layer 416 into channel areas such as dividing the surface into half or into quadrants for example.

Also by this example, the convolutional layers 412, 414, and 416 may use 3 × 3 kernels with a stride of one, and 8 channels are provided as input to convolutional layer 414 and 416. [

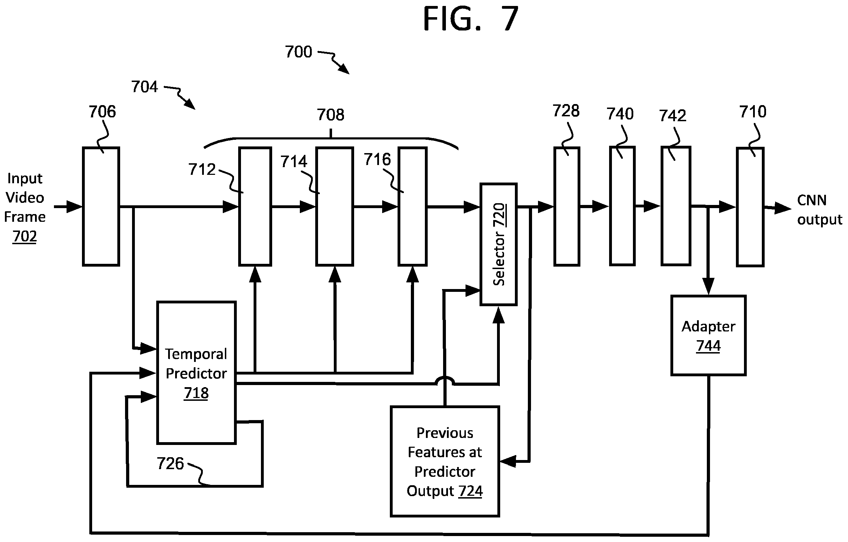

By yet another alternative, the input layer 412 additionally may receive input previous frame features from a layer far downstream and downstream of the available omission section 308 in order to better factor higher level context, such as semantics. This alternative is discussed below with FIG. 7.

The Auxiliary NN 406 also may have the output layer 418 convert the compressed features into probabilities. This may be an activation function layer such as tanh. By one approach, one output node of the output layer 418 each may provide one probability output for each region of a frame expected as an output from the temporal predictor unit. Thus, a probability may be expected for each non-overlapping 4x4 region of pixels for example, although many other examples could be used from a single pixel (per pixel) basis to a per-frame basis where only a single probability is provided for an entire frame.

The decision unit 408 may have a threshold compare unit 422 to compare the output probabilities to a predetermined threshold such as 50% that the probability of using downstream previous features instead of downstream current features would not be noticeable. When a probability is less than 50%, the associated region of pixels (or single pixel or frame) are provided a "do calculate" signal from the decision unit 408, which refers to a region that permits the available omission layers to operate. When the probability is greater than 50%, a "do not calculate" signal is issued by the decision unit 408 so that the corresponding regions of the available omission layers will be turned off. Thus, the signal may be a simple binary bit (1 or 0).

By one alternative, a smoothing unit 410 may be provided to smooth the areas that are and are not to use the downstream previous features rather than downstream current features. For instance, if a large area of an image has regions of a layer to omit processing while only a single region amid those other omission regions is a calculate region, then that calculate region may be changed to an omission region anyway. This mainly may occur when the user will not notice the difference or an error occurs in the correlation. By one example, the regions may be smoothed by detecting outliers within a large block of pixels with many pixels of the opposite signal (do or do not calculate). The threshold for the smoothing may be determined by experimentation and may depend on the relative amount of pixel area (or region area) between the regions with the two decisions or could depend on pixel region location relative to each other instead, for example. The smoothing may be performed by a median filter for example.

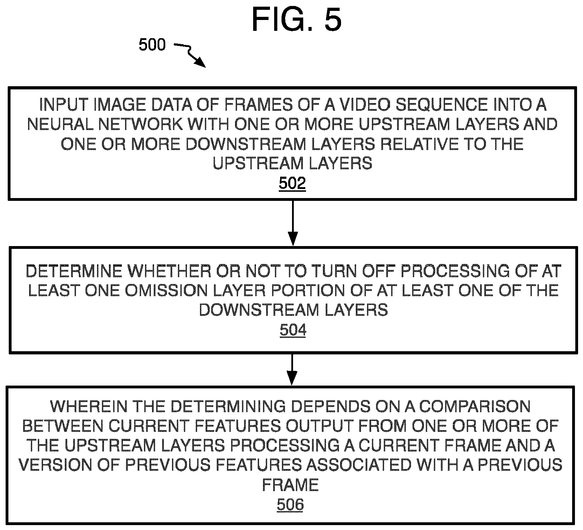

Referring to FIG. 5, an example process 500 for highly efficient neural network video image processing described herein is arranged in accordance with at least some implementations of the present disclosure. In the illustrated implementation, process 500 may include one or more operations, functions, or actions as illustrated by one or more of operations 502 to 506 numbered evenly. By way of non-limiting example, process 500 may be described herein with reference to any of the example image processing systems, such as systems 300, 400, 700, 800, 900, and 1100 described herein and where relevant.

Process 500 may include "input image data of frames of a video sequence into a neural network with one or more upstream layers and one or more downstream layers relative to the upstream layers" 502. This refers to inputting images into a main neural network (or flow path, or pipeline) and typically one frame at a time. The input image data may be in many different formats, and by one example, may be input into the network with a different channel for each color, such as three, although other color schemes, and additional input channels, may be provided as well, such as with a transparency or depth channel, to name a few examples.

Process 500 may include "determine whether or not to turn off processing of at least one omission layer portion of at least one of the downstream layers" 504. Thus, this operation refers to the use of a temporal predictor unit that is on a side pathway or auxiliary pathway that receives neural network features diverged from one or more upstream layers of the main NN pathway, and then provides control signals to downstream layers (relative to the upstream layer) on the main NN pathway to turn off, or disable, at least regions (or omission layer portions) on the downstream layers. This will either have the effect of reducing or eliminating power consumed to process features for those turned-off or disabled omission layer portions or regions, or increase throughput of the main NN when the input of the turned-off omission layer portions is dropped as described above. Operating on a per-region basis to actually or effectively turn off regions of a frame locally has been found to be a best balance between efficiency and image quality (or accuracy) rather than operating on a per pixel-basis or a pre-frame basis where the entire frame could be turned off on a single signal.

By one approach, the disabling signals (or do calculate/do not calculate signals) are provided to downstream omission layers that provide the available omission regions and that are downstream relative to the upstream layers providing the diverged current features, and the omission layer portions that can be turned off are on omission layers in a designated available omission section. The available omission section may have multiple layers on the main NN or main NN pathway. As described below, a main NN may have multiple separate available omission sections. The maximum number of layers in an available omission section depends on the specific architecture of the main NN and is determined by experimentation. It should be noted that turning off or disabling omission layer regions or portions generally may be referred to herein as turning off or disabling an omission layer, even though precisely, the method still is disabling on a per-region basis.

By one form, the same region of an image (or more precisely a feature surface) may be turned off for multiple downstream layers and all layers in an available omission section. The layers in the available omission section may be multiple consecutive layer or layer blocks as mentioned above. Also, as mentioned, these turned off layers may be convolutional layers alone or with convolutional supporting layers. When the available omission section is not omitted, then the last available omission layer in the available omission section provides the downstream current features to a next layer of the main NN. When the available omission section is omitted, however, the last (or only) available omission layer does not provide output downstream current features to the selector mentioned above. In this case, stored downstream previous features are provided as input to the selector and a next layer of the main NN.

The determining operation also may include "wherein the determining depends on a comparison between current features output from one or more of the upstream layers processing a current frame and a version of previous features associated with a previous frame" 506. This may involve providing the temporal predictor with one or more auxiliary neural networks where the comparison includes generating s a correlation between the two types of features. The auxiliary NN may receive upstream current features from the upstream layer or layers. The auxiliary NN also may receive upstream previous features stored in a memory from the processing of a previous frame. By one form, the auxiliary NN compresses the features and then provides the compressed features to an output layer that generates a probability that previous features can replace current features at a region of the frame (or feature surface) without noticeably reducing inference accuracy.

By one alternative form, compressed features output from the auxiliary NN are used to form a recurrent loop and is input to the auxiliary NN for processing as a version of the previous features instead of storing the actual upstream previous features. Correlation is then determined by the auxiliary neural network and represented by its compressed previous feature output, also referred to herein as the internal state of the auxiliary NN, for the recurrency. Other alternatives exist such as additionally using far downstream features as input to factor higher-level context or semantics. Otherwise, when multiple separate available omission sections are present, the input to a downstream temporal predictor unit may be indication of a temporal predictor unit decision from an upstream temporal predictor unit. Many other details are provided below.

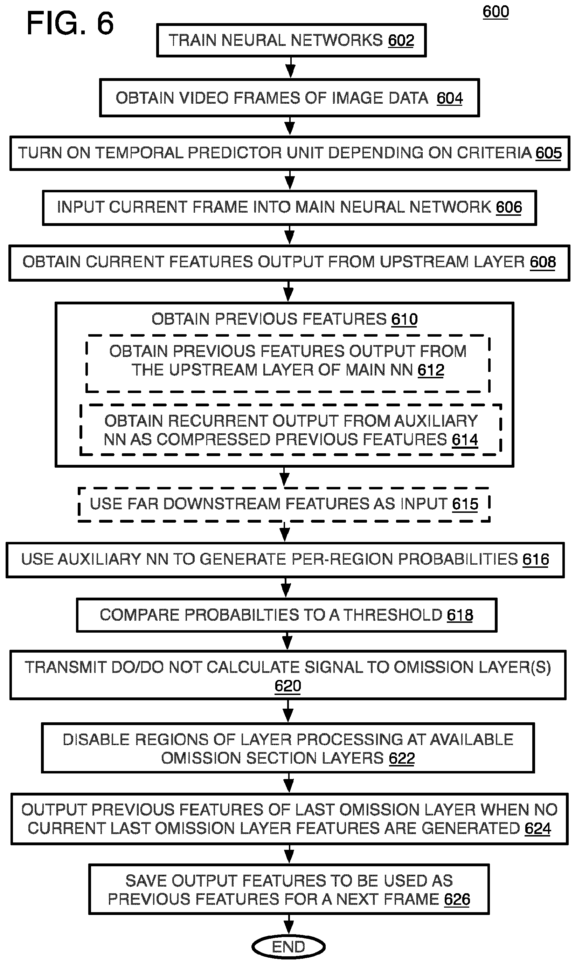

Referring to FIG. 6, an example process 600 for highly efficient neural network video image processing described herein is arranged in accordance with at least some implementations of the present disclosure. In the illustrated implementation, process 600 may include one or more operations, functions, or actions as illustrated by one or more of operations 602 to 626 numbered generally evenly. By way of non-limiting example, process 600 may be described herein with reference to any of the example image processing systems, such as systems 300, 400, 700, 800, 900, and 1100 described herein and where relevant.

As a preliminary matter, process 600 may include "train neural networks" 602, and by one example, this is performed offline before a runtime. The main NN may be trained as by known methods and depending on the architecture and purpose of the NN. No significant changes to the training are needed to implement the main NN disclosed herein.

As to the training of the auxiliary NN itself, when the auxiliary NN has the structure shown on temporal predictor unit 318 (FIG. 4), the auxiliary NN may be trained by unsupervised learning. The training may determine filter or kernel coefficients for the convolutional layers 412, 414, and 416, and may determine weights for the output layer 418, for example. The training does not require labeled (or annotated) data since the goal of the auxiliary NN is to reduce calculations while preserving the quality of the original or main NN output rather than having precisely accurate output features at the auxiliary NN. Thus, during training, the output of the main NN serves as the labels, and the training attempts to minimize calculations while keeping distortions in the auxiliary NN output as small as possible.

Process 600 may include "obtain video frames of image data" 604. The video frames may be captured from cameras or obtained from memory. Otherwise, the images are as described above.

Process 600 then optionally may include "turn on temporal predictor unit depending on criteria" 605. Thus, by some examples, the temporal predictor unit will always be switched on whenever an image-related neural network is being used by a device. In other cases, the controls of the neural network may perform a cost analysis and check to see whether some increased efficiency is needed to reduce bitrate, computational load, and/or power consumption. In this case, some fixed or varying threshold may be kept for comparison to actual or expected computational loads for example, and the temporal predictor unit may be turned on when the computational load is expected to rise above the threshold. Otherwise, the threshold could be based on target or actual bitrate or other factors.

Process 600 may include "input current frame into main neural network" 606. The input to the main NN is not particularly limited to a specific format as explained above. Also, the neural network is not particularly limited to specific tasks except to be providing data that assist with image-related tasks such as computer-vision tasks including object detection, object segmentation, background blurring, 3D modeling, and so forth. Other image related tasks may be performed instead such as tasks that transform image data such as with encoding or decoding for example, or camera or image quality or pre-processing refinement related tasks such as with tone correction or automatic white balance correction, and so forth. Many other tasks are contemplated.

Process 600 may include "obtain current features output from upstream layer" 608, and by one example, these are upstream current features of a current frame being analyzed by the main NN. Under normal operations, the upstream current features are to be input to the available omission section that has one or more layers with omission regions or portions that can be omitted depending on the output from the auxiliary NN. It will be understood that the upstream current features may be obtained from a single upstream layer that is upstream from the available omission section, but in other possible alternatives, multiple upstream layers may provide the upstream current features, such as some channels or regions of a frame from one upstream layer, and other channels or regions from a different upstream layer, or upstream layers could provide the upstream current features alternatively from multiple upstream layers. Also, while the same upstream layer usually always provides the upstream current features, this could change over time if desired.

Process 600 may include "obtain previous features" 610. By one form, upstream previous features are from analysis or propagation of a previous frame relative to the current frame, and may be consecutively previous to the current frame. By one form, process 600 may include "obtain previous features output from the upstream layer of main NN" 612, and referring to the same upstream layer that provided the upstream current features. In this case, each time or at some interval the auxiliary neural network is to be operating, the current features are placed in a memory to be used as previous features for a next (or current) frame.

Alternatively, process 600 may include "obtain recurrent output from auxiliary NN as compressed previous features" 614. In this case, the version of previous features provided as input to the auxiliary NN are compressed previous features from its own convolutional layer. As mentioned above, the layer from the auxiliary NN providing the upstream compressed previous features may be the last compressing or convolutional layer in the auxiliary NN but could be a different layer, and could be more than one layer with different layers providing output of different channels or regions of a frame. Such data may be used on the fly so that the system does not need extra memory or buffers above that already used for the auxiliary NN anyway. On one form however, a memory may be used to hold the compressed previous features until needed.

For yet another alternative, process 600 may include "use far downstream features as input" 615. Here, far downstream refers to at least downstream from one or more available omission sections. The temporal predictor unit may have a relatively small auxiliary NN with a small receptive field so that the omission decisions are based on local attributes of the input. Therefore, by incorporating information from the previous frame and "far downstream" on the main CNN and into the auxiliary NN, higher-level context can be added into the decision, thereby producing better discrimination between previous and current features.

Referring to FIG. 7 particularly, an example image processing system 700 for highly efficient neural network video image processing has components that are the same or similar to those components of system 300 described above and need not be described again. Those components with a similar label number perform a similar task than those described with system 300. In system 700, however, additional far downstream layers 728, 740, 742 are provided between a selector 720 and an output layer 710. These additional layers may be further convolutional layers or other types of layers or layer blocks. By one form, these additional layers may further compress features, thereby refining the feature representations. For example, the additional features may better represent image context such as semantic classifications when object segmentation is being performed for example.

To take advantage of this arrangement, the system 700 may obtain previous features from a previous frame and from one of the additional downstream layers, such as the last additional layer 742 before the output layer 710 or before a layer that transforms the features into values that cannot be considered compressed image data features any more, such as probability or other type of values for example. The downstream information is taken from the previous frame since it is assumed high correlation exists between the semantic information between consecutive video frames. These previous features then also may be input to the auxiliary NN of the temporal predictor unit 718 along with the current features from the upstream layer(s) 706 and the recurrent previous features 726 (or actual upstream previous features) for example. By one possible alternative form, the far downstream previous features from the additional far downstream layers may be the only previous features provided to the temporal predictor unit 718.

By one form, when the additional downstream layers have compressed features, such as by pooling or a kernel stride, or decompressed features by upsampling, and to a resolution that cannot be used by the temporal predictor unit 718, the system 700 also may have an adapter unit 744 that may either upsample or downsample, such as by channel compression, the features to provide a lower spatial resolution of the additional previous features that can be handled and may be expected by the temporal predictor unit 718. The adapter unit 744 then may provide the adapted far downstream previous features to the temporal predictor unit 718.

Process 600 next may include "use auxiliary NN to generate per-region probabilities" 616. Here, the output of the output layer of the auxiliary NN are probabilities that downstream previous features can be used instead of downstream current features without significant detrimental impact to the quality or accuracy of the output of the main NN. In other words, the temporal predictor unit attempts to predict whether the temporal change in the output of the available omission section, being a difference between current and previous features, falls below a threshold that would not affect the final outcome of the main NN. While the regions may be 4x4 in one example, the regions could be any shape or size that is less than a whole frame, but alternatively, a single probability could be provided for individual pixels or for an entire frame when desired.

Process 600 may include "compare probabilities to a threshold" 618. The threshold applied by a decision unit at the temporal predictor unit for example may be set by experimentation to provide the best balance between efficiency and accuracy of the main NN. By default, the threshold may simply be set at 0.5 when probabilities are normalized output at 0.0 to 1.0 where 0.0 indicates a region on the omission layers in the available omission section should not be omitted, while 1.0 indicates that the NN calculations for the region should be omitted. As mentioned, the probability and threshold may be applied for a region of any size, per-pixel, or per-frame. By one form, all probabilities of all regions from the output layer of the temporal predictor unit may be summed or combined to be compared to a single per-frame threshold for example. Many variations are contemplated.

Process 600 may include "transmit do/do not calculate signal to omission layer(s)" 620. The probabilities then may be converted to do calculate or do not calculate signals, such as a single bit binary signal. Thus, by one approach, the output of the temporal predictor unit may be a per-pixel or per-region binary decision which indicates whether the main NN can be disabled in this region without resulting in degradation of the main NN's output. The signal then may be transmitted at least to a neural network control of the available omission section, and may be transmitted, directly or indirectly, to controls of individual layers or regions of layers within the available omission section.

Process 600 may include "disable regions of layer processing at available omission section layers" 622. Here, the decisions in the form of the binary signal are fed into the control or controllers of the layers of the available omission section where the system disables (or turns off) the operation of those regions with do not calculate signals. By one form, the specific regions are actually turned off and by locally disabling circuits when the decisions are provided on a per-region basis. Also, in one example, the same region is disabled for all channels when each channel represents a surface of a whole frame rather than different parts of a frame.

As mentioned above, and by one form, this may include a software or firmware module NN control that receives the decisions from the temporal predictor unit and indicates to omission control circuitry hardware on a NN image signal processor (ISP), for example, to turn off region operations. The neural network hardware, and by one example for convolutional NNs, may have circuitry to turn off or disable by locally toggling circuitry on a MAC when the MAC is operating a single region, or even part of a MAC to turn off only those circuit elements that operate a specific region of a layer or feature surface. By one form, known circuitry for disabling a portion of a NN performing calculations for specific regions of a feature surface may be added to the NN software and hardware to provide the described efficiency results with the auxiliary NN. In other cases, the disclosed system may take control of an existing sparsity mechanism that can turn off NN processing of specific regions or pixels for other reasons than that mentioned herein. For example, when an input to a neural network is zero and the output also must then be zero, some known NN systems and processors disable operations for this input. This sparsity circuitry can be "hacked" or controlled to perform the omission disabling of the NN circuitry according to the signals from the temporal predictor unit.

Also as mentioned in the alternative, the processing of an omission layer region may be effectively turned-off by having input circuitry simply drop (or overwrite) input current features of the omitted region either by omitting loading the current features into input buffers of the MAC or by omitting the loading of the current features from the MAC input buffer to input registers (or queues) of the MAC-banks. This operates the main NN without actually eliminating power flow to circuits of the MACs.

Process 600 may include "output previous features of last omission layer when no current last omission layer features are generated" 624. Thus, at the end of the available omission section, and when regions of the omission layers of the available omission section have been omitted by being disabled, the selector may obtain stored downstream previous features of a previous frame and that were previously output from the available omission section. The stored downstream previous features are obtained when no downstream current features are present from the output of the available omission section. The downstream previous features may be obtained from memory and are obtained from the same available omission layer (or layers) as the layers that would provide the downstream current features. This way, the layers downstream from the available omission section are oblivious to the omissions.

While it is mentioned that the last available omission layer provides the downstream current features to be replaced by downstream previous features, it is understood that it could be more than one layer when different regions come from different parallel omission layers in the available omission section for example. Also as mentioned above, by an alternative, the selector could receive the signal from the temporal predictor unit as well to operate gates that control whether to use output from the available omission section or stored downstream previous features. The selected downstream features then may be provided to a next or one or more output layers of the main NN layer, block, section, additional NN, or as output itself of the main NN.

Process 600 may include "save output features to be used as previous features for a next frame" 626. Thus, whenever a new set of downstream current features are generated as output from the available omission section layers, those downstream current features are saved in a memory or buffer to replace current features of a next or subsequent frame if needed. Otherwise, whenever downstream previous features are used to replace the downstream current features, those downstream previous features are simply maintained in the memory for analysis of a next frame. Processing of a video sequence then repeats process 600 for each frame or other unit (such as a next tensor of image data).

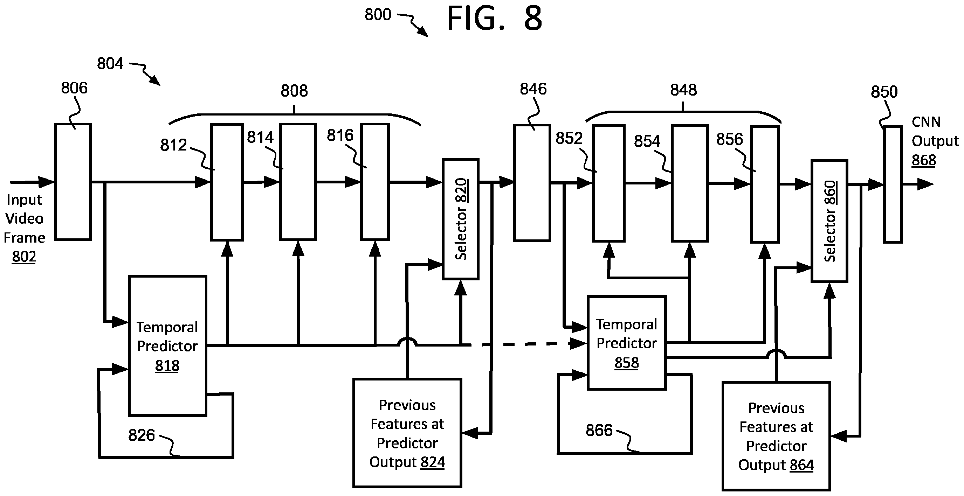

Referring to FIG. 8 in another alternative, a single main NN may have multiple separate available omission sections that each have their own temporal predictor unit. It will be understood that this refers to the operation of the temporal predictor unit being independent but the software and hardware providing the operations, such as an auxiliary NN, may be shared using known techniques such as context switching techniques for example. As one example, a system 800 may have a main neural network 804 that has two structures similar to system 300 connected in series. Those elements similar to the elements in system 300 may be numbered or labeled similarly and perform the same tasks so they need not be described again.

Also in this alternative, a first selector 820 receives downstream features (whether current features or previous features) downstream from a first available omission section 808 and provides the features to one or more upstream layers 846 that are upstream relative to a second available omission section 848. The first available omission section 808 receives signals form a first temporal predictor unit 818, while the second available omission section 848 receives signals in the same or similar manner from a second temporal predictor unit 858. As with the first available omission section 808, the second available omission section 848 either provides downstream current features to a second selector 860 or the second selector 860 receives the downstream previous features from a memory 864. The second selector 860 then provides the features to one or more output layers 850. While only two available omission sections 808 and 848 are shown on system 800, many more may be provided, and provided in series or in parallel depending on main NN architecture, and whenever one or more layers could be disabled to increase efficiency as described herein. The multiple available omission sections may all have the same configuration (same layers and layer specifications), or individual sections may be different in layer type, specification, and so forth.

By another variation, the multiple available omission sections could be provided with an interdependency to increase the efficiency. Specifically, a relatively deep CNN (or other NN) may benefit from several available omission sections where each downstream section has a temporal predictor unit that learns from the temporal predictor unit or units upstream. In such an arrangement, the do/do not calculate decision of an upstream temporal predictor can be fed as an additional input to one or more of the downstream temporal predictor units to enhance their discriminative capabilities. On system 800, this is shown by the dashed arrow indicating that the signal from the first temporal predictor unit 818 is received by the second temporal predictor unit 858. Thus, learning that a specific region was omitted can be used to determine that the same region, as well as regions near that omitted region, for a downstream available omission section also should be omitted.

### Experiments

### Use Case 1 - Background Concealment (blurring) in Video Chat

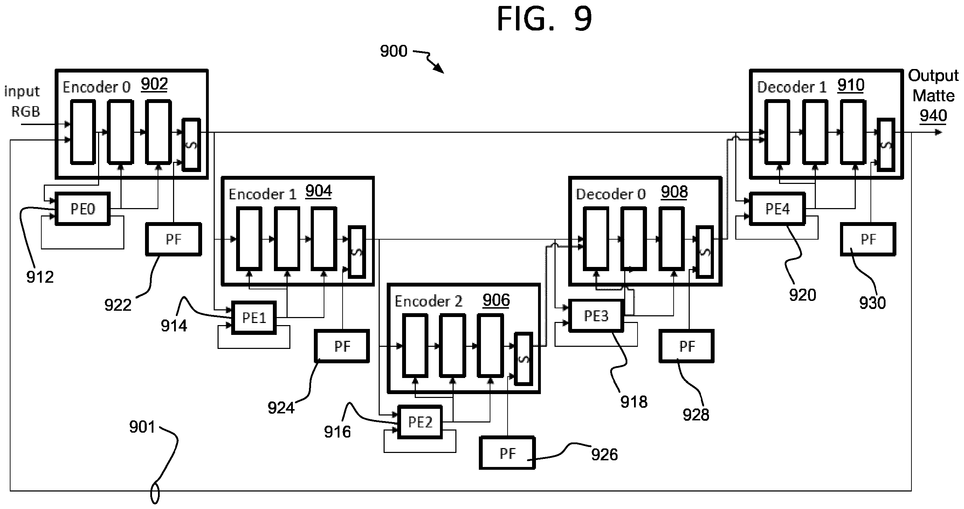

Referring to FIG. 9, a first experiment used a system 900 has a main NN with a topology to perform foreground and background discrimination for background concealment (blurring) using a CNN with a temporal-predictor unit and associated layers attached to each available omission section, here referred to as an encoder or decoder depending on whether features are being compressed or de-compressed on the U-Net. Each encoder and decoder is a system 300 (FIG. 3) on a main NN and with a recurrent-based internal state order M = 2 channels output from a last convolutional layer of the auxiliary NN on each temporal predictor unit. In this experiment, multiple available omission sections were used in the U-net topology. Thus, each encoder and decoder may have several consecutive convolutional layers. The connections between the encoders and decoders involve pooling and upscaling operations. The CNN also takes an output matte (from loop 901) from a preceding frame as input for a next frame, making the system 900 a recursive neural network. See U.S. Patent Publication No.: 2020/0327334, published October 15, 2020, which is incorporated herein for all purposes.

The consecutive layers in each encoder 902, 904, 906 and decoder 908, 910 is treated as an available omission section with a selector S. Thus, five independent temporal predictor units 912, 914, 916, 918, and 920 were used and configured as in system 300. The upstream current features input to each temporal predictor unit was the output of the previous encoder or decoder. The replacement downstream previous features 922, 924, 926, 928, and 930 of each encoder or decoder was stored in memory. The temporal predictor units were attached and trained as a retro-fit to an existing pre-trained segmentation CNN. The computational cost of the temporal predictor units was negligible compared to the load of each encoder and decoder.

As to the statistical results, the predicted segmentation CNN required 64.8% of the operations needed by the unpredicted counterpart and with negligible segmentation error. This was measured by comparing performance based on a benchmark video sequence. The benchmark was designed to challenge the segmentation algorithm itself, hence it is comprised of mostly complex scenes. Thus, the computation savings represent a worst-case scenario. A breakdown of the numbers for each video used is given in Table 1.

**Table 1. Detailed performance on 12 videos of background concealment benchmarks.**

| Videos in the background concealment benchmark | Prediction Error | | Calculation percent | |
|---|---|---|---|---|
| | zero state | w/ temp. info. | zero state | with temp. info. |
| Media_01_CR_Low | 0.0018 | **0.0007** | 48.9% | 46.6% |
| Media_02_CR_High | 1.1508 | **0.0210** | 67.7% | 71.3% |
| Media_03_Cafe_Medium | 0.0148 | **0.0050** | 58.6% | 56.0% |
| Media_04_Cafe_High | 0.4371 | **0.1867** | 75.6% | 76.8% |
| Media_05_Cafe_Acc | 0.1630 | **0.0234** | 63.8% | 63.7% |
| Media_06_Outdoor_Low | 0.0090 | **0.0042** | 53.0% | 61.7% |
| Media_07_Outdoor_Medium_Jacket | 0.3350 | **0.0441** | 62.4% | 65.8% |
| Media_08_Outdoor_High | 1.4080 | **0.2646** | 74.5% | 76.2% |
| Media_09_Outdoor_Medium_Hoodi | 0.1685 | **0.0281** | 62.3% | 63.4% |
| Media_10_Cube_High | 1.1179 | **0.4379** | 71.1% | 73.8% |
| Media_11_Cube_Low | 0.0269 | **0.0253** | 50.8% | 49.6% |
| Media_12_Cube_Medium_Acc | 1.7994 | **0.1587** | 73.9% | 73.1% |

As to a visual evaluation, a side-by-side comparison of the segmentation results of the original CNN and the predicted CNN show activated and deactivated regions of the three encoders. The images showed three different colors when: (1) all three encoders are deactivated, (2) all three encoders are active, and (3) different combinations with some of the encoders active and some not. The images showed a large portion of a frame is deactivated for video conferences.

The results also verify that the temporal predictor units make use of the temporal information by comparing the performance of the original flow versus performance when use of the recurrent features based on the internal states are disabled (zero input or zero state in Table 1). In Table 1, the prediction error is the error between the predicted CNN and the reference full-calculation CNN. In all videos, omitting the use of the internal state (zero state) leads to increased error, sometimes by more than an order of magnitude. This tends to show that the internal state provides cues that help discern regions where carrying over the past values would produce errors, and that temporal information is indeed significant. Table 1 also shows that temporal information contributes to the prediction, making it more powerful than commonplace spatial sparsity.

### Use-Case 2 - Object Detection

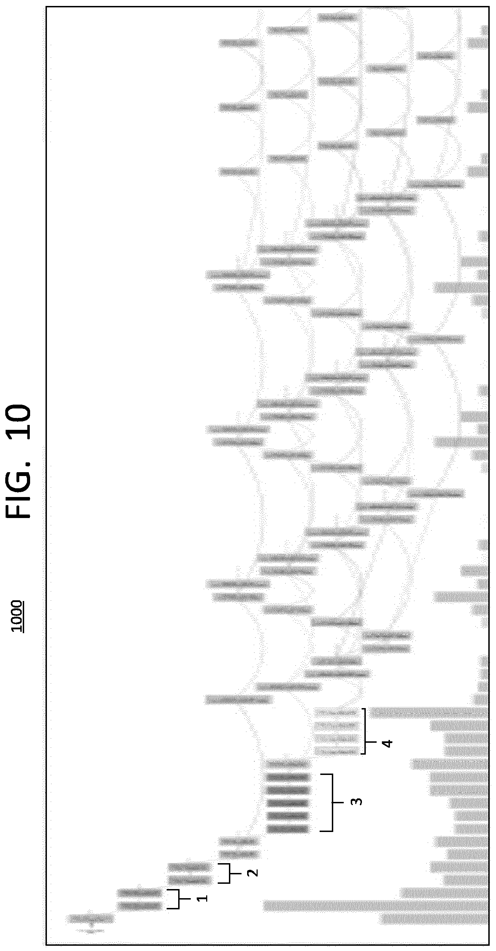

Referring to FIG. 10 for a second experiment, a CNN was trained and evaluated for object detection. The network topology was a variant of the EfficientDet object-detection framework to detect pedestrians and cars. A graph 1000 shows the neural network architecture for performing background blurring and is graphed by computational load. While the exact layer specifications are not shown, the complexity of layer arrangement and how the available omission sections can still be implemented is clear. The main NN shown on graph 1000 has a variety of convolutional layers and supporting layers in many different flow paths. The topology has a computationally-heavy "backbone" towards the beginning of the network. Four independent available omission sections 1 to 4 were used as shown on the graph 1000 and in the heavier beginning portion of the neural network where similar consecutive convolutional layers existed.

With the use of the four available omission sections, the object-detection CNN required 66.4% of the operations needed by the unpredicted counterpart operated without using the present method herein. This was measured using the test sequences of a joint attention in autonomous driving (JAAD) object detection dataset. The results also showed that the original CNN detections were not as accurate as the predicted CNN detections. As configured, active regions without omissions "follow" the objects, and the CNN turns itself off in uninteresting regions. As to the EfficientDet object-detection topology, the computational load bars at the bottom of graph 1000 represent the compute load of each layer. The four available omission sections show the reduced loads in the computationally-heavy "backbone" of the topology.

In addition, any one or more of the operations of the processes in FIGS. 5-6 may be undertaken in response to instructions provided by one or more computer program products. Such program products may include signal bearing media providing instructions that, when executed by, for example, a processor, may provide the functionality described herein. The computer program products may be provided in any form of one or more machine-readable media. Thus, for example, a processor including one or more processor core(s) may undertake one or more of the operations of the example processes herein in response to program code and/or instructions or instruction sets conveyed to the processor by one or more computer or machine-readable media. In general, a machine-readable medium may convey software in the form of program code and/or instructions or instruction sets that may cause any of the devices and/or systems to perform as described herein. The machine or computer readable media may be a non-transitory article or medium, such as a non-transitory computer readable medium, and may be used with any of the examples mentioned above or other examples except that it does not include a transitory signal per se. It does include those elements other than a signal per se that may hold data temporarily in a "transitory" fashion such as RAM and so forth.

As used in any implementation described herein, the term "module" refers to any combination of software logic, firmware logic, hardware logic, and/or circuitry configured to provide the functionality described herein. The software may be embodied as a software package, code and/or instruction set or instructions, and "hardware", as used in any implementation described herein, may include, for example, singly or in any combination, hardwired circuitry, programmable circuitry, state machine circuitry, fixed function circuitry, execution unit circuitry, and/or firmware that stores instructions executed by programmable circuitry. The modules may, collectively or individually, be embodied as circuitry that forms part of a larger system, for example, an integrated circuit (IC), system on-chip (SoC), and so forth.

As used in any implementation described herein, the term "logic unit" refers to any combination of firmware logic and/or hardware logic configured to provide the functionality described herein. The "hardware", as used in any implementation described herein, may include, for example, singly or in any combination, hardwired circuitry, programmable circuitry, state machine circuitry, and/or firmware that stores instructions executed by programmable circuitry. The logic units may, collectively or individually, be embodied as circuitry that forms part of a larger system, for example, an integrated circuit (IC), system on-chip (SoC), and so forth. For example, a logic unit may be embodied in logic circuitry for the implementation firmware or hardware of the coding systems discussed herein. One of ordinary skill in the art will appreciate that operations performed by hardware and/or firmware may alternatively be implemented via software, which may be embodied as a software package, code and/or instruction set or instructions, and also appreciate that logic unit may also utilize a portion of software to implement its functionality.

As used in any implementation described herein, the term "component" may refer to a module or to a logic unit, as these terms are described above. Accordingly, the term "component" may refer to any combination of software logic, firmware logic, and/or hardware logic configured to provide the functionality described herein. For example, one of ordinary skill in the art will appreciate that operations performed by hardware and/or firmware may alternatively be implemented via a software module, which may be embodied as a software package, code and/or instruction set, and also appreciate that a logic unit may also utilize a portion of software to implement its functionality.

The terms "circuit" or "circuitry," as used in any implementation herein, may comprise or form, for example, singly or in any combination, hardwired circuitry, programmable circuitry such as computer processors comprising one or more individual instruction processing cores, state machine circuitry, and/or firmware that stores instructions executed by programmable circuitry. The circuitry may include a processor ("processor circuitry") and/or controller configured to execute one or more instructions to perform one or more operations described herein. The instructions may be embodied as, for example, an application, software, firmware, etc. configured to cause the circuitry to perform any of the aforementioned operations. Software may be embodied as a software package, code, instructions, instruction sets and/or data recorded on a computer-readable storage device. Software may be embodied or implemented to include any number of processes, and processes, in turn, may be embodied or implemented to include any number of threads, etc., in a hierarchical fashion. Firmware may be embodied as code, instructions or instruction sets and/or data that are hard-coded (e.g., nonvolatile) in memory devices. The circuitry may, collectively or individually, be embodied as circuitry that forms part of a larger system, for example, an integrated circuit (IC), an application-specific integrated circuit (ASIC), a system-on-a-chip (SoC), desktop computers, laptop computers, tablet computers, servers, smartphones, etc. Other implementations may be implemented as software executed by a programmable control device. In such cases, the terms "circuit" or "circuitry" are intended to include a combination of software and hardware such as a programmable control device or a processor capable of executing the software. As described herein, various implementations may be implemented using hardware elements, software elements, or any combination thereof that form the circuits, circuitry, processor circuitry. Examples of hardware elements may include processors, microprocessors, circuits, circuit elements (e.g., transistors, resistors, capacitors, inductors, and so forth), integrated circuits, application specific integrated circuits (ASIC), programmable logic devices (PLD), digital signal processors (DSP), field programmable gate array (FPGA), logic gates, registers, semiconductor device, chips, microchips, chip sets, and so forth.

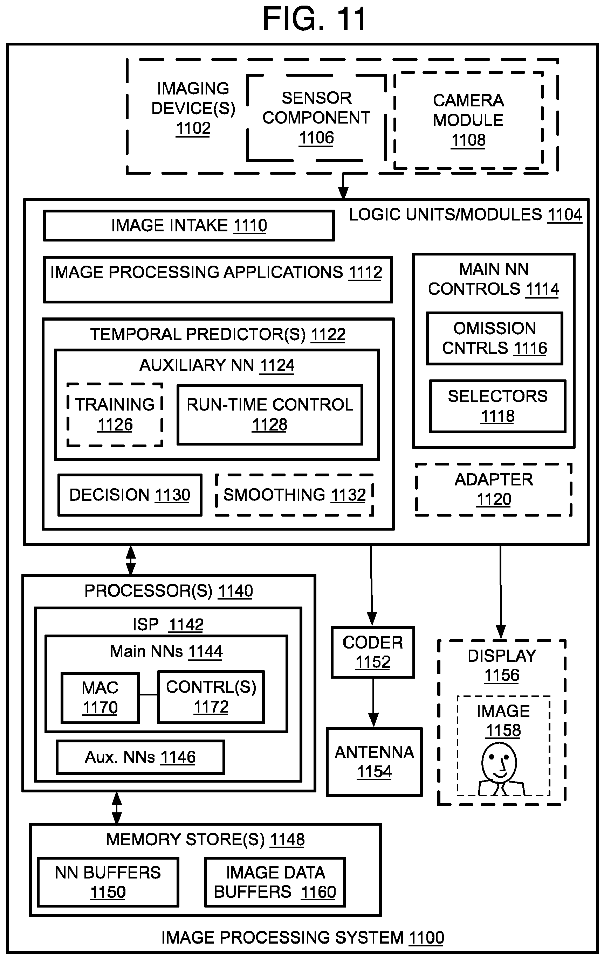

Referring to FIG. 11, an example image processing system 1100 is arranged in accordance with at least some implementations of the present disclosure. In various implementations, the example image processing system 1100 may have an imaging device 1102 to form or receive captured image data. This can be implemented in various ways. Thus, in one form, the image processing system 1100 may be a digital camera or other image capture device, and imaging device 1102, in this case, may be the camera hardware and camera sensor software, module, or component 1108. In other examples, imaging processing system 1100 may have an imaging device 1102 that includes, or may be a camera, and logic modules 1104 may communicate remotely with, or otherwise may be communicatively coupled to, the imaging device 1102 for further processing of the image data.

In either case, such technology may include a camera such as a digital camera system, a dedicated camera device, or an imaging phone, whether a still picture or video camera or some combination of both. Thus, in one form, imaging device 1102 may include camera hardware and optics including one or more sensors as well as auto-focus, zoom, aperture, ND-filter, auto-exposure, flash, and actuator controls. These controls may be part of a sensor module or component 1106 for operating the sensor. The sensor component 1106 may be part of the imaging device 1102, or may be part of the logical modules 1104 or both. Such sensor component can be used to generate images for a viewfinder and take still pictures or video. The imaging device 1102 also may have a lens, an image sensor with a RGB Bayer color filter, an analog amplifier, an A/D converter, other components to convert incident light into a digital signal, the like, and/or combinations thereof. The digital signal also may be referred to as the raw image data herein.

Other forms include a camera sensor-type imaging device or the like (for example, a webcam or webcam sensor or other complementary metal-oxide-semiconductor-type image sensor (CMOS)), without the use of a red-green-blue (RGB) depth camera and/or microphone-array to locate who is speaking. The camera sensor may also support other types of electronic shutters, such as global shutter in addition to, or instead of, rolling shutter, and many other shutter types as long as a multi-frame statistics gathering window can be used. In other examples, an RGB-Depth camera and/or microphone-array might be used in addition to or in the alternative to a camera sensor. In some examples, imaging device 1102 may be provided with an eye tracking camera. It will be understood that device 1100 may not have a camera and retrieves images from a memory, whether or not transmitted from another device.

In the illustrated example, the logic modules 1104 may include an image intake unit 1110 that pre-processes raw data or obtains images from memory so that the images are ready for any of the computer-vision or image data transformation operations mentioned herein. In order to increase efficiency for neural network video image processing operations as described herein, the logic units or modules 1104 may include the image processing applications 1112 that will operate the neural networks, or more precisely provide input to the neural networks while main NN controls 1114 run the neural networks and propagate the input data through the neural networks. The main NN controls 1114 may have omission controls 1116 as described above to turn off or disable neural network operations, and selector 1118 controls to provide output form memory or available omission sections of the main NN as described above and to a next NN layer or as output.

The logic modules 1104 also may include one or more temporal predictor units 1122. Each temporal predictor unit 1122 may have an auxiliary NN 1124 with a training unit 1126 that may perform training tasks mentioned above and run-time control unit 1128 that controls the input, processing, and output of the layers of the auxiliary NN 1124. The temporal predictor unit 1122 also may have a decision unit 1130 and optional smoothing unit 1132 all as described above with system 300 and temporal predictor unit 318 (FIGS. 3-4) described above as well. An additional adapter unit 1120 also may be provided according to system 700 (FIG. 7) described above.

The logic modules 1104 may be communicatively coupled to the imaging device 1102, when present, in order to receive raw image data when provided but is otherwise in communication with memory store(s) 1148 to retrieve images. The memory store(s) 1148 may have NN buffers 1150 to hold features as described herein, image data buffers 1160. The memory 1148 may include external or internal memory formed of RAM such as DRAM, cache, or many other types of volatile or non-volatile memory.

The image processing system 1100 may have one or more of processors 1140 such as the Intel Atom, and one or more dedicated image signal processors (ISPs) 1142. The processors 1140 may include any graphics accelerator, GPU, and so forth. It will be understood that at least parts of the units, components, or modules mentioned may be considered to be at least partly formed or on at least one of the processors 1140. By one example, the ISP 1142 may have circuitry forming the one or more main NNs 1144 and one or more auxiliary NNs 1146. The main NN may have circuitry forming MACs 1170 controlled by NN controllers 1172 to disable portions of a feature surface (or image or layer) for example. The controllers 1172 may have skip or sparsity circuitry described above and receiving signals by software or firmware skip or omission controls 1116.

The system 1100 also may have one or more displays 1156, coder 1152, and antenna 1154. In one example implementation, the image processing system 1100 may have the display 1156, at least one processor 1140 communicatively coupled to the display, at least one memory 1148 communicatively coupled to the processor and having any of the data mentioned herein. The coder 1128 and antenna 1154 may be provided to compress or decompress image data for transmission to or from other devices that may display or store the images. It will be understood that the image processing system 1100 may also include a decoder (or coder 1152 may include a decoder) to receive and decode image data for processing by the system 1100. Otherwise, the processed image 1158 may be displayed on display 1156 or stored in memory 1148. As illustrated, any of these components may be capable of communication with one another and/or communication with portions of logic modules 1104 and/or imaging device 1102. Thus, processors 1140 may be communicatively coupled to both the image device 1102 and the logic modules 1104 for operating those components. By one approach, although image processing system 1100, as shown in FIG. 11, may include one particular set of blocks or actions associated with particular components or modules, these blocks or actions may be associated with different components or modules than the particular component or module illustrated here.

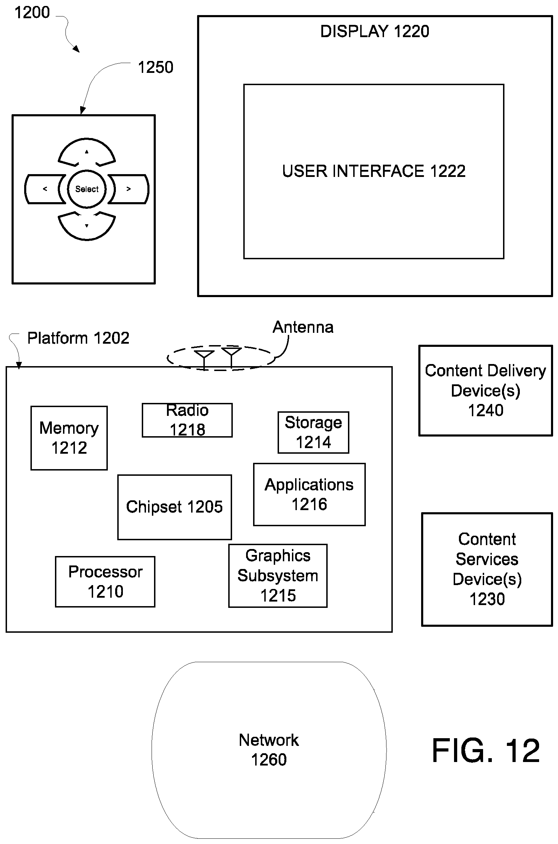

Referring to FIG. 12, an example system 1200 in accordance with the present disclosure operates one or more aspects of the image processing system described herein. It will be understood from the nature of the system components described below that such components may be associated with, or used to operate, certain part or parts of the image processing system described above. In various implementations, system 1200 may be a media system although system 1200 is not limited to this context. For example, system 1200 may be incorporated into a digital still camera, digital video camera, or other mobile device with camera or video functions. Otherwise, system 1200 may be any device whether it has a camera or not, such as a mobile small device or an edge device. System 1200 may be any of an imaging phone, webcam, personal computer (PC), laptop computer, ultra-laptop computer, tablet, touch pad, portable computer, handheld computer, palmtop computer, personal digital assistant (PDA), cellular telephone, combination cellular telephone/PDA, television, smart device (e.g., smart phone, smart tablet or smart television), mobile internet device (MID), messaging device, data communication device, and so forth.

In various implementations, system 1200 includes a platform 1202 coupled to a display 1220. Platform 1202 may receive content from a content device such as content services device(s) 1230 or content delivery device(s) 1240 or other similar content sources. A navigation controller 1250 including one or more navigation features may be used to interact with, for example, platform 1202 and/or display 1220. Each of these components is described in greater detail below.

In various implementations, platform 1202 may include any combination of a chipset 1205, processor 1210, memory 1212, storage 1214, graphics subsystem 1215, applications 1216, and/or radio 1218. Chipset 1205 may provide intercommunication among processor 1210, memory 1212, storage 1214, graphics subsystem 1215, applications 1216 and/or radio 1218. For example, chipset 1205 may include a storage adapter (not depicted) capable of providing intercommunication with storage 1214.

Processor 1210 may be implemented as a Complex Instruction Set Computer (CISC) or Reduced Instruction Set Computer (RISC) processors; x86 instruction set compatible processors, multi-core, or any other microprocessor or central processing unit (CPU). In various implementations, processor 1210 may be dual-core processor(s), dual-core mobile processor(s), and so forth.

Memory 1212 may be implemented as a volatile memory device such as, but not limited to, a Random Access Memory (RAM), Dynamic Random Access Memory (DRAM), or Static RAM (SRAM).

Storage 1214 may be implemented as a non-volatile storage device such as, but not limited to, a magnetic disk drive, optical disk drive, tape drive, an internal storage device, an attached storage device, flash memory, battery backed-up SDRAM (synchronous DRAM), and/or a network accessible storage device. In various implementations, storage 1214 may include technology to increase the storage performance enhanced protection for valuable digital media when multiple hard drives are included, for example.

Graphics subsystem 1215 may perform processing of images such as still or video for display. Graphics subsystem 1215 may be a graphics processing unit (GPU), image signal processor (ISP), or a visual processing unit (VPU), for example. An analog or digital interface may be used to communicatively couple graphics subsystem 1215 and display 1220. For example, the interface may be any of a High-Definition Multimedia Interface, Display Port, wireless HDMI, and/or wireless HD compliant techniques. Graphics subsystem 1215 may be integrated into processor 1210 or chipset 1205. In some implementations, graphics subsystem 1215 may be a stand-alone card communicatively coupled to chipset 1205.

The graphics and/or video processing techniques described herein may be implemented in various hardware architectures. For example, graphics and/or video functionality may be integrated within a chipset. Alternatively, a discrete graphics and/or video processor may be used. As still another implementation, the graphics and/or video functions may be provided by a general purpose processor, including a multi-core processor. In further implementations, the functions may be implemented in a consumer electronics device.

Radio 1218 may include one or more radios capable of transmitting and receiving signals using various suitable wireless communications techniques. Such techniques may involve communications across one or more wireless networks. Example wireless networks include (but are not limited to) wireless local area networks (WLANs), wireless personal area networks (WPANs), wireless metropolitan area network (WMANs), cellular networks, and satellite networks. In communicating across such networks, radio 818 may operate in accordance with one or more applicable standards in any version.

In various implementations, display 1220 may include any television type monitor or display. Display 1220 may include, for example, a computer display screen, touch screen display, video monitor, television-like device, and/or a television. Display 1220 may be digital and/or analog. In various implementations, display 1220 may be a holographic display. Also, display 1220 may be a transparent surface that may receive a visual projection. Such projections may convey various forms of information, images, and/or objects. For example, such projections may be a visual overlay for a mobile augmented reality (MAR) application. Under the control of one or more software applications 1216, platform 1202 may display user interface 1222 on display 1220.

In various implementations, content services device(s) 1230 may be hosted by any national, international and/or independent service and thus accessible to platform 1202 via the Internet, for example. Content services device(s) 1230 may be coupled to platform 1202 and/or to display 1220. Platform 1202 and/or content services device(s) 1230 may be coupled to a network 1260 to communicate (e.g., send and/or receive) media information to and from network 1260. Content delivery device(s) 1240 also may be coupled to platform 1202 and/or to display 1220.

In various implementations, content services device(s) 1230 may include a cable television box, personal computer, network, telephone, Internet enabled devices or appliance capable of delivering digital information and/or content, and any other similar device capable of unidirectionally or bidirectionally communicating content between content providers and platform 1202 and/display 1220, via network 1260 or directly. It will be appreciated that the content may be communicated unidirectionally and/or bidirectionally to and from any one of the components in system 1200 and a content provider via network 1260. Examples of content may include any media information including, for example, video, music, medical and gaming information, and so forth.

Content services device(s) 1230 may receive content such as cable television programming including media information, digital information, and/or other content. Examples of content providers may include any cable or satellite television or radio or Internet content providers. The provided examples are not meant to limit implementations in accordance with the present disclosure in any way.

In various implementations, platform 1202 may receive control signals from navigation controller 1250 having one or more navigation features. The navigation features of controller 1250 may be used to interact with user interface 1222, for example. In implementations, navigation controller 1250 may be a pointing device that may be a computer hardware component (specifically, a human interface device) that allows a user to input spatial (e.g., continuous and multi-dimensional) data into a computer. Many systems such as graphical user interfaces (GUI), and televisions and monitors allow the user to control and provide data to the computer or television using physical gestures.

Movements of the navigation features of controller 1250 may be replicated on a display (e.g., display 1220) by movements of a pointer, cursor, focus ring, or other visual indicators displayed on the display. For example, under the control of software applications 1216, the navigation features located on navigation controller 1250 may be mapped to virtual navigation features displayed on user interface 1222, for example. In implementations, controller 1250 may not be a separate component but may be integrated into platform 1202 and/or display 1220. The present disclosure, however, is not limited to the elements or in the context shown or described herein.

In various implementations, drivers (not shown) may include technology to enable users to instantly turn on and off platform 1202 like a television with the touch of a button after initial boot-up, when enabled, for example. Program logic may allow platform 1202 to stream content to media adaptors or other content services device(s) 1230 or content delivery device(s) 1240 even when the platform is turned "off." In addition, chipset 1205 may include hardware and/or software support for 8.1 surround sound audio and/or high definition (7.1) surround sound audio, for example. Drivers may include a graphics driver for integrated graphics platforms. In implementations, the graphics driver may comprise a peripheral component interconnect (PCI) Express graphics card.

In various implementations, anyone or more of the components shown in system 1200 may be integrated. For example, platform 1202 and content services device(s) 1230 may be integrated, or platform 1202 and content delivery device(s) 1240 may be integrated, or platform 1202, content services device(s) 1230, and content delivery device(s) 1240 may be integrated, for example. In various implementations, platform 1202 and display 1220 may be an integrated unit. Display 1220 and content service device(s) 1230 may be integrated, or display 1220 and content delivery device(s) 1240 may be integrated, for example. These examples are not meant to limit the present disclosure.

In various implementations, system 1200 may be implemented as a wireless system, a wired system, or a combination of both. When implemented as a wireless system, system 1200 may include components and interfaces suitable for communicating over a wireless shared media, such as one or more antennas, transmitters, receivers, transceivers, amplifiers, filters, control logic, and so forth. An example of wireless shared media may include portions of a wireless spectrum, such as the RF spectrum and so forth. When implemented as a wired system, system 1200 may include components and interfaces suitable for communicating over wired communications media, such as input/output (I/O) adapters, physical connectors to connect the I/O adapter with a corresponding wired communications medium, a network interface card (NIC), disc controller, video controller, audio controller, and the like. Examples of wired communications media may include a wire, cable, metal leads, printed circuit board (PCB), backplane, switch fabric, semiconductor material, twisted-pair wire, co-axial cable, fiber optics, and so forth.

Platform 1202 may establish one or more logical or physical channels to communicate information. The information may include media information and control information. Media information may refer to any data representing content meant for a user. Examples of content may include, for example, data from a voice conversation, videoconference, streaming video, electronic mail ("email") message, voice mail message, alphanumeric symbols, graphics, image, video, text and so forth. Data from a voice conversation may be, for example, speech information, silence periods, background noise, comfort noise, tones and so forth. Control information may refer to any data representing commands, instructions or control words meant for an automated system. For example, control information may be used to route media information through a system, or instruct a node to process the media information in a predetermined manner. The implementations, however, are not limited to the elements or in the context shown or described in FIG. 12.

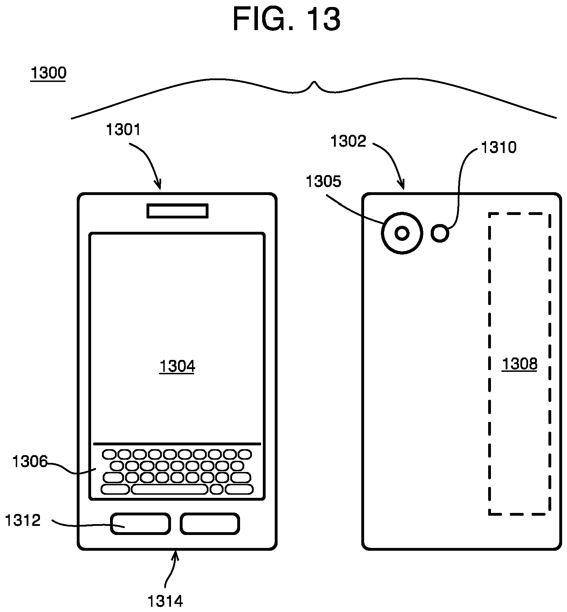

Referring to FIG. 13, a small form factor device 1300 is one example of the varying physical styles or form factors in which systems 1100 or 1200 may be embodied. By this approach, device 1300 may be implemented as a small or edge mobile computing device having wireless capabilities. A mobile computing device may refer to any device having a processing system and a mobile power source or supply, such as one or more batteries, for example.

As described above, examples of a mobile computing device may include a digital still camera, digital video camera, mobile devices with camera or video functions such as imaging phones, webcam, personal computer (PC), laptop computer, ultra-laptop computer, tablet, touch pad, portable computer, handheld computer, palmtop computer, personal digital assistant (PDA), cellular telephone, combination cellular telephone/PDA, television, smart device (e.g., smart phone, smart tablet or smart television), mobile internet device (MID), messaging device, data communication device, and so forth.

Examples of a mobile computing device also may include computers that are arranged to be worn by a person, such as a wrist computer, finger computer, ring computer, eyeglass computer, belt-clip computer, arm-band computer, shoe computers, clothing computers, and other wearable computers. In various implementations, for example, a mobile computing device may be implemented as a smart phone capable of executing computer applications, as well as voice communications and/or data communications. Although some implementations may be described with a mobile computing device implemented as a smart phone by way of example, it may be appreciated that other implementations may be implemented using other wireless mobile computing devices as well. The implementations are not limited in this context.

As shown in FIG. 13, device 1300 may include a housing with a front 1301 and a back 1302. Device 1300 includes a display 1304, an input/output (I/O) device 1306, and an integrated antenna 1308. Device 1300 also may include navigation features 1312. I/O device 1306 may include any suitable I/O device for entering information into a mobile computing device. Examples for I/O device 1306 may include an alphanumeric keyboard, a numeric keypad, a touch pad, input keys, buttons, switches, microphones, speakers, voice recognition device and software, and so forth. Information also may be entered into device 1300 by way of microphone 1314, or may be digitized by a voice recognition device. As shown, device 1300 may include a camera 1305 (e.g., including at least one lens, aperture, and imaging sensor) and a flash 1310 integrated into back 1302 (or elsewhere) of device 1300. The implementations are not limited in this context.

Various forms of the devices and processes described herein may be implemented using hardware elements, software elements, or a combination of both. Examples of hardware elements may include processors, microprocessors, circuits, circuit elements (e.g., transistors, resistors, capacitors, inductors, and so forth), integrated circuits, application specific integrated circuits (ASIC), programmable logic devices (PLD), digital signal processors (DSP), field programmable gate array (FPGA), logic gates, registers, semiconductor device, chips, microchips, chip sets, and so forth. Examples of software may include software components, programs, applications, computer programs, application programs, system programs, machine programs, operating system software, middleware, firmware, software modules, routines, subroutines, functions, methods, procedures, software interfaces, application program interfaces (API), instruction sets, computing code, computer code, code segments, computer code segments, words, values, symbols, or any combination thereof. Determining whether an implementation is implemented using hardware elements and/or software elements may vary in accordance with any number of factors, such as desired computational rate, power levels, heat tolerances, processing cycle budget, input data rates, output data rates, memory resources, data bus speeds and other design or performance constraints.

One or more aspects of at least one implementation may be implemented by representative instructions stored on a machine-readable medium which represents various logic within the processor, which when read by a machine causes the machine to fabricate logic to perform the techniques described herein. Such representations, known as "IP cores" may be stored on a tangible, machine readable medium and supplied to various customers or manufacturing facilities to load into the fabrication machines that actually make the logic or processor.

While certain features set forth herein have been described with reference to various implementations, this description is not intended to be construed in a limiting sense. Hence, various modifications of the implementations described herein, as well as other implementations, which are apparent to persons skilled in the art to which the present disclosure pertains are deemed to lie within the scope of the present disclosure.

The following examples pertain to further implementations.

By an example one or more first implementations, a computer-implemented method of image processing comprises inputting image data of frames of a video sequence into a neural network with one or more upstream layers and one or more downstream layers relative to the upstream layers; and determining whether or not to turn off processing of at least one omission layer portion of at least one of the downstream layers, wherein the determining depends on a comparison between current features output from one or more of the upstream layers processing a current frame and a version of previous features of the neural network associated with a previous frame.

By one or more example second implementation, and further to the first implementation, wherein the version of previous features are previous features output from a same upstream layer providing the current features.

By one or more example third implementations, and further to the first or second implementation, wherein the current features are those features arranged to be input into an available omission section of omission layers with omission layer portions that can be omitted.

By one or more example fourth implementations, and further to any of the first to third implementation, wherein the turning off of processing results in turning off power to accelerator circuits so that no power is being consumed to process data at the at least one omission layer portion.

By one or more example fifth implementations, and further to any of the first to third implementation, wherein the turning off of processing refers to effectively turning off processing by omitting processing of the at least one omission layer portion of the neural network to increase throughput of the neural network.

By one or more example sixth implementations, and further to any of the first to fifth implementation, wherein the neural network is a main neural network, and wherein the method comprising determining, at an auxiliary neural network, correlations between the current features and versions of the previous features to perform the comparison.

By one or more example seventh implementations, and further to the sixth implementation, wherein the version of the previous features are compressed previous features associated with the previous frame and obtained as recurrent output from the auxiliary neural network and input back into the auxiliary neural network along with the current features of the current frame.

By one or more example eighth implementations, and further to the seventh implementation, wherein the compressed previous features are obtained from a last convolutional layer of the auxiliary neural network before an output layer of the auxiliary neural network that provides probability values as output.

By one or more example ninth implementations, and further to the seventh implementation, wherein at least one of the downstream layers with at least one omission layer portion is an omission layer, and wherein the auxiliary neural network has an output layer that outputs one or more probabilities each associated with at least a region of the current frame and being a probability that using previous features as output from at least one omission layer rather than current features output from the at least one omission layer is adequate for the main neural network to perform an intended task.

By one or more example tenth implementations, and further to the ninth implementation, wherein the probabilities are compared to one or more thresholds to determine whether or not to omit processing at the one or more omission layer portions of the downstream layers.

By one or more example eleventh implementations, and further to the seventh implementation, wherein the auxiliary neural network has three convolutional layers.

By one or more example twelfth implementations, a system for image processing comprises memory storing image data of frames of a video sequence and neural network features; and processor circuitry forming at least one processor communicatively coupled to the memory, the at least one processor being arranged to operate by inputting the image data into a neural network, wherein the neural network has one or more upstream layers and one or more downstream layers relative to the upstream layers, and determining whether or not to turn off processing of at least one omission layer portion of at least one of the downstream layers, wherein the determining depending on a correlation between current features output from one or more of the upstream layers processing a current frame and a version of previous features associated with a previous frame.

By one or more example thirteenth implementations, and further to the twelfth implementation, wherein the layers available to have omission layer portions to be omitted are a plurality of consecutive downstream convolutional layers forming at least one available omission section of the main neural network.

By one or more example fourteenth implementations, and further to the thirteenth or fourteenth implementation, wherein the layers available to have omission layer portions to be omitted are layer blocks each with one convolutional layer and one or more convolutional supporting layers.

By one or more example fifteenth implementations, and further to the fourteenth implementation, wherein the supporting layers comprise a supporting activation function layer of individual convolutional layers.

By one or more example sixteenth implementations, and further to any of the twelfth to the fifteenth implementation, wherein a plurality of consecutive convolutional blocks or convolutional layers is an available omission section, and the neural network may have multiple separate available omission sections each with its own auxiliary neural network operations to determine the correlations for each available omission section.

By one or more example seventeenth implementations, and further to any of the twelfth to sixteenth implementation, the system comprising having at least one control to operate the neural network and to turn off processing at parts of the neural network associated with feature regions of a feature surface associated with one of the frames and to be turned off initially for reasons not related to the correlations, and wherein the at least one control is operable to turn off the omission layer portions due to the correlations.

By one or more example eighteenth implementations, at least one non-transitory article having at least one computer readable medium comprising a plurality of instructions that in response to being executed on a computing device, cause the computing device to operate by inputting image data of frames of a video sequence into a neural network with one or more upstream layers and one or more downstream layers relative to the upstream layers; and determining whether or not to turn off processing of at least one omission layer portion of at least one of the downstream layers wherein the determining depending on a correlation between current features output from one or more of the upstream layers processing a current frame and a version of previous features associated with a previous frame.

By one or more example nineteenth implementations, and further to the eighteenth implementation, wherein the at least one processor is arranged to operate by inputting the previous features, the current features, and far downstream features in an auxiliary neural network to determine the correlations, wherein the far downstream features are obtained from one or more layers downstream of the layers available for providing the at least one omission layer portions.

By one or more example twentieth implementations, and further to the eighteenth or nineteenth implementation, wherein the at least one processor is arranged to operate by changing the decision to omit or not omit an omission layer portion when the omission layer portion and an adjacent area to the omission layer portion meet at least one criterium related to relative area to portion size or relative area to portion pixel image positions.

By one or more example twenty-first implementations, and further to any of the eighteenth implementation to the twentieth implementations, wherein the determining comprises inputting the current and previous features into an auxiliary neural network that generates probabilities of success of using previous features output from a downstream layer available to have the at least one omission layer portion rather than outputting current features from the downstream layer, and wherein the probabilities are compared to a threshold to make omission layer portion-level omission decisions.

By one or more example twenty-second implementations, and further to any one of the eighteenth implementation to the twenty-first implementation, wherein the determining comprises making an individual omission decision for at least one of: (1) each pixel of an image, individual regions 4x4 pixel regions, and (3) an entire frame.

By one or more example twenty-third implementations, and further to the twenty-second implementation, wherein the determining comprises transmitting a omit or no omit signal of multiple portions to each downstream layer available as an omission layer with omission layer portions.

By one or more example twenty-fourth implementations, and further to the twenty-third implementation, wherein the instructions cause the computing device to operate by using saved previous features output from a last omission layer of an available omission section of one or more multiple omission layers when no current features are output from the last omission layer.

By one or more example twenty-fifth implementations, and further to the twenty-second implementation, wherein the previous features are upstream previous features available to be input to the at least one omission layer, and when the at least one omission layer is turned off, the instructions cause the computing device to operate by outputting downstream previous features previously outputted from the at least one omission layer.

In one or more example twenty-sixth implementations, a device or system includes a memory and processor circuitry to perform a method according to any one of the above implementations.

In one or more example twenty-seventh implementations, at least one machine readable medium includes a plurality of instructions that in response to being executed on a computing device, cause the computing device to perform a method according to any one of the above implementations.

In one or more example twenty-eighth implementations, an apparatus may include means for performing a method according to any one of the above implementations.

The above examples may include specific combination of features. However, the above examples are not limited in this regard and, in various implementations, the above examples may include undertaking only a subset of such features, undertaking a different order of such features, undertaking a different combination of such features, and/or undertaking additional features than those features explicitly listed. For example, all features described with respect to any example methods herein may be implemented with respect to any example apparatus, example systems, and/or example articles, and *vice versa.*

## Claims

1. A computer-implemented method of image processing, comprising:
inputting image data of frames of a video sequence into a neural network with one or more upstream layers and one or more downstream layers relative to the upstream layers; and
determining whether or not to turn off processing of at least one omission layer portion of at least one of the downstream layers, wherein the determining depends on a comparison between current features output from one or more of the upstream layers processing a current frame and a version of previous features of the neural network associated with a previous frame.

2. The method of claim 1 wherein the version of previous features are previous features output from a same upstream layer providing the current features.

3. The method of claim 1 or 2 wherein the current features are those features arranged to be input into an available omission section of omission layers with omission layer portions that can be omitted.

4. The method of any one of claims 1 to 3 wherein the turning off of processing results in turning off power to accelerator circuits so that no power is being consumed to process data at the at least one omission layer portion.

5. The method of any one of claims 1 to 3 wherein the turning off of processing refers to effectively turning off processing by omitting processing of the at least one omission layer portion of the neural network to increase throughput of the neural network.

6. The method of any one of claims 1 to 5 wherein the neural network is a main neural network, and wherein the method comprising determining, at an auxiliary neural network, correlations between the current features and versions of the previous features to perform the comparison.

7. The method of claim 6 wherein the version of the previous features are compressed previous features associated with the previous frame and obtained as recurrent output from the auxiliary neural network and input back into the auxiliary neural network along with the current features of the current frame.

8. The method of claim 7 wherein at least one of the downstream layers with at least one omission layer portion is an omission layer, and wherein the auxiliary neural network has an output layer that outputs one or more probabilities each associated with at least a region of the current frame and being a probability that using previous features as output from at least one omission layer rather than current features output from the at least one omission layer is adequate for the main neural network to perform an intended task.

9. A system for image processing, comprising:
memory storing image data of frames of a video sequence and neural network features; and
processor circuitry forming at least one processor communicatively coupled to the memory, the at least one processor being arranged to operate by:
inputting the image data into a neural network, wherein the neural network has one or more upstream layers and one or more downstream layers relative to the upstream layers, and
determining whether or not to turn off processing of at least one omission layer portion of at least one of the downstream layers, wherein the determining depending on a correlation between current features output from one or more of the upstream layers processing a current frame and a version of previous features associated with a previous frame.

10. The system of claim 9 wherein a plurality of consecutive convolutional blocks or convolutional layers is an available omission section, and the neural network has multiple separate available omission sections each with its own auxiliary neural network operations to determine the correlations for each available omission section.

11. The system of claim 9 or 10 having at least one control to operate the neural network and to turn off processing at parts of the neural network associated with feature regions of a feature surface associated with one of the frames and to be turned off initially for reasons not related to the correlations, and wherein the at least one control is operable to turn off the omission layer portions due to the correlations.

12. At least one non-transitory article having at least one computer readable medium comprising a plurality of instructions that in response to being executed on a computing device, cause the computing device to operate by:
inputting image data of frames of a video sequence into a neural network with one or more upstream layers and one or more downstream layers relative to the upstream layers; and
determining whether or not to turn off processing of at least one omission layer portion of at least one of the downstream layers wherein the determining depending on a correlation between current features output from one or more of the upstream layers processing a current frame and a version of previous features associated with a previous frame.

13. The article of claim 12 wherein the at least one processor is arranged to operate by inputting the previous features, the current features, and far downstream features in an auxiliary neural network to determine the correlations, wherein the far downstream features are obtained from one or more layers downstream of the layers available for providing the at least one omission layer portions.

14. At least one machine readable medium comprising a plurality of instructions that in response to being executed on a computing device, causes the computing device to perform the method according to any one of claims 1-8.

15. An apparatus comprising means for performing the method according to any one of claims 1-8.
